# EUROPÄISCHE PATENTSCHRIFT

(11) **EP 1 212 743 B1**
(45) Veröffentlichungstag und Bekanntmachung des Hinweises auf die Patenterteilung: **02.05.2003**
(21) Anmeldenummer: 00967575.2
(22) Anmeldetag: 09.09.2000
(51) Int. Cl.: G09B 23/28, G09B 23/34

(54) **KIEFERMODELL**
JAW MODEL
MODELE DE MACHOIRE

(30) Priorität: 17.09.1999 DE 19946114
(43) Veröffentlichungstag der Anmeldung: 12.06.2002
(73) Patentinhaber: Oestreich, Gerd, Calle Jacaranda Pasaje PG J4 (SV)
(72) Erfinder: Oestreich, Gerd, Calle Jacaranda Pasaje PG J4 (SV)
(74) Vertreter: Grünecker, Kinkeldey, Stockmair & Schwanhäusser
(86) Internationale Anmeldenummer: DE0003190
(87) Internationale Veröffentlichungsnummer: WO01022385

(56) Entgegenhaltungen:
- DE-U- 29 916 978
- US-A- 2 333 795
- US-A- 2 669 779
- US-A- 4 846 684
- US-A- 5 222 891

## Beschreibung

### Technisches Gebiet

Die Erfindung betrifft ein Kiefermodell zur Demonstration von zahnerhaltenden und teilprothetischen zahnmedizinischen Arbeiten sowie Krankheitsbildern mit einem auf einem Sockel angeordneten Kieferbogen, der mindestens eine Ausnehmung zur Aufnahme eines austauschbaren Einsatzteils aufweist, das ein Anschauungsmuster bildet.

### Stand der Technik

Aus der DE 38 43 106 ist ein Kiefermodell der vorstehenden Art bekannt, bei dem das Einsatzteil von einem austauschbaren Einzelzahn gebildet wird, der einen vorzugsweise zylindrischen, in eine Bohrung des Kieferbogens steckbaren Zapfen aufweist, zu dessen Arretierung in der Bohrung ein von einer Feder gebildetes Rastelement dient. Das bekannte Kiefermodell ermöglicht einen schnellen Austausch unterschiedlicher Einsatzteile. Wenn es gleichwohl nicht voll zu befriedigen vermag, so deshalb, weil die Einsatzteile in einem besonderen Behältnis aufbewahrt werden müssen, das nicht nur zusätzlichen Raum beansprucht, sondern auch leicht verlegt werden kann.

Einzelzähne bilden auch bei einem aus der US 5 222 891 bekannten Kiefermodell austauschbare Einsatzteile, die in diesem Fall mit jeweils einer Führungsleiste versehen sind, die zu Justierzwecken in eine am Kieferbogen vorgesehene Nut einfügbar ist.

Bekannt ist schließlich aus der US 2 333 795 ein Tablett mit mehreren integralen Kieferbögen, von denen einer einen Behälter für austauschbare Teile umschließt, wobei die Teile ungeordnet und ungesichert im Behälter untergebracht sind und folglich leicht verloren gehen können.

### Darstellung der Erfindung

Der Erfindung liegt die Aufgabe zugrunde, ein einzelnes Kiefermodell zu schaffen, das als Behältnis für die geordnete und sichere Unterbringung mehrerer Einsatzteile nutzbar ist. Diese Aufgabe wird bei einem Kiefermodell der in Betracht gezogenen Gattung erfindungsgemäß dadurch gelöst, dass der Sockel an seiner Unterseite mit Aufbewahrungskammem zur unverlierbaren Aufbewahrung weiterer Einsatzteile versehen ist.

Das erfindungsgemäße Kiefermodell ist einfach handhabbar und gestattet auf engstem Raum die sichere Unterbringung mehrerer unterschiedlicher Einsatzteile.

### Kurze Beschreibung der Zeichnungen

Weitere Merkmale und Einzelheiten der Erfindung ergeben sich aus den Unteransprüchen und der nachstehenden Beschreibung zweier in der beigefügten Zeichnung dargestellter Ausführungsformen. Es zeigen:
- Fig. 1: die perspektivische Ansicht eines Kiefermodells und eines Einsatzteils vor dessen Einbringung in das Modell;
- Fig. 2: das in Fig. 1 dargestellte Kiefermodell und das in dieses eingesetzte Einsatzteil;
- Fig. 3: in vergrößertem Maßstab einen Schnitt längs der Linie III-III in Fig. 2;
- Fig. 4: einen der Fig. 3 entsprechenden Schnitt durch eine modifizierte Ausführungsform;
- Fig. 5: den mit Aufbewahrungskammem für verschiedene Einsatzteile versehenen Sockel des Kiefermodells gemäß Fig. 1 und 2 und
- Fig. 6: eine der Fig. 1 entsprechende Ansicht eines modifizierten Kiefermodells.

### Wege zur Ausführung der Erfindung

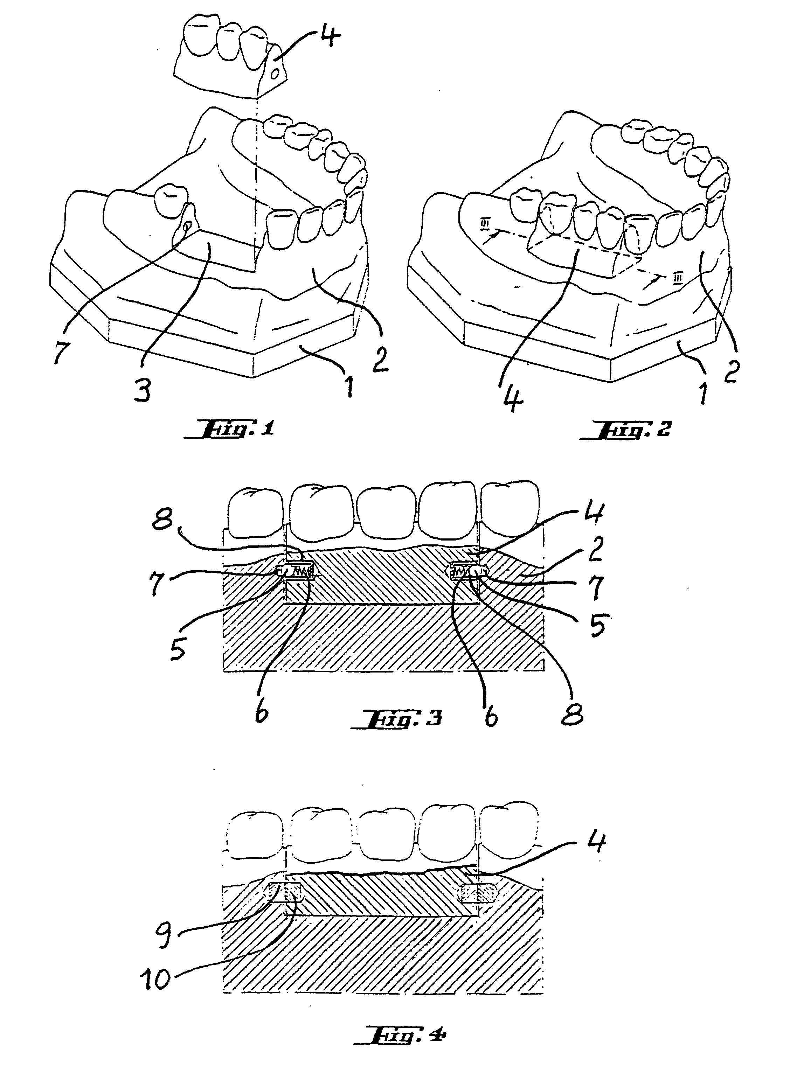

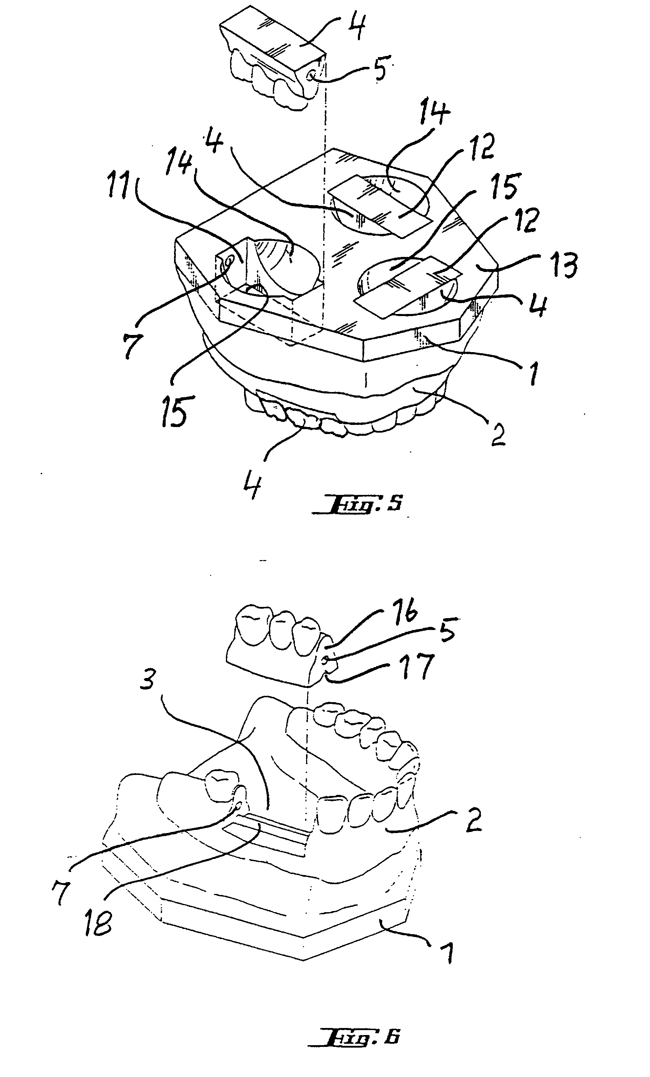

In den Figuren ist 1 der Sockel eines Kiefermodells, dessen Kieferbogen 2 mit einer Ausnehmung 3 für ein Einsatzteil 4 versehen ist, das eine Zahngruppe von drei Zähnen aufweist. Zur Sicherung der Lage des Einsatzteils 4 in der in Fig. 2 gezeigten Position dienen Rastelemente 5, die im Falle der Ausführungsform gemäß Fig. 3 von Kugeln gebildet werden, die unter der Einwirkung jeweils einer Feder 6 in von Bohrungen gebildete Rastmulden 7 einrasten. Anstelle von in Buchsen 8 mit einem nach innen gebördelten Halterand federnd gelagerten Kugeln können zur Arretierung auch einen Reibungsschluss bewirkende Puffer 9, 10 aus Gummi oder einem geeigneten Kunststoff genutzt werden. Eine entsprechende Ausführungsform zeigt die Fig. 4.
Wie aus Fig. 5 erkennbar, ist der Sockel 1 mit mehreren Aufbewahrungskammern 11 für zusätzliche Einsatzteile 4 versehen, deren Zähne beispielsweise aus unterschiedlichen Materialien bestehen. Zur Halterung bzw. Arretierung der Einsatzteile 4 in den Aufbewahrungskammern 11 dienen die gleichen Arretierungselemente wie zur Halterung und Arretierung des Einsatzelements 4 im Kieferbogen 2. Die Grundflächen 12 der in den Aufbewahrungskammern 11 untergebrachten Einsatzteile 4 fluchten mit der Bodenfläche 13 des Sockels 1, um die Einsatzteile gleichwohl problemlos entnehmen zu können, ist der Boden des Sockels 1 mit beidseits der Längskanten der Einsatzteile angeordneten Griffmulden 14, 15 ausgestattet.

Fig. 6 zeigt ein Kiefermodell, bei dem zur zusätzlichen Justierung eines Einsatzteils 16 die Grundfläche des Einsatzteils mit einer V-förmigen Nut 17 und einer der Form der Nut 17 angepassten Führungsleiste 18 versehen ist.

## Patentansprüche

1. Kiefermodell zur Demonstration von zahnerhaltenden und teilprothetischen zahnmedizinischen Arbeiten sowie Krankheitsbildern mit einem auf einem Sockel (1) angeordneten Kieferbogen, der mindestens eine Ausnehmung (3) zur Aufnahme eines austauschbaren Einsatzteils (4) aufweist, das ein Anschauungsmuster bildet, **dadurch gekennzeichnet, dass** der Sockel (1) an seiner Unterseite mit Aufbewahrungskammem (11) zur unverlierbaren Aufbewahrung weiterer Einsatzteile (4) versehen ist.

2. Kiefermodell nach Anspruch 1, **dadurch gekennzeichnet, dass** die Grundflächen (12) der in den Aufbewahrungskammem (11) untergebrachten Einsatzteile (4) mit der Bodenfläche (13) des Sockels (1) fluchten.

3. Kiefermodell nach Anspruch 1 oder 2, **dadurch gekennzeichnet, dass** zur Halterung der Einsatzteile (4) in der Ausnehmung und den Aufbewahrungskammem (11) Rastelemente (5) oder einen Reibangsschluß bewirkende Puffer (9,10) aus Gummi oder einem geeigneten Kunststoff dienen.

4. Kiefermodell nach einem der Ansprüche 1 bis 3, **dadurch gekennzeichnet, dass** der Boden des Sockels (1) mit das Erfassen der in den Aufbewahrungskammem (11) gelagerten Einsatzteile (4) erleichternden Griffmulden (14, 15) versehen ist.

5. Kiefermodell nach einem der Ansprüche 3 oder 4, **dadurch gekennzeichnet, dass** die Einsatzteile (4) an sich gegenüberliegenden Seiten mit den Rastelementen (5) versehen sind.

6. Kiefermodell nach einem der Ansprüche 1 bis 5, **dadurch gekennzeichnet, dass** zur Justierung der Einsatzteile (16) in der Ausnehmung (3) eine Nut (17) und eine Führungsleiste (18) dienen.

7. Kiefermodell nach einem der Ansprüche 3 bis 6, **dadurch gekennzeichnet, dass** die Rastelemente (5) von unter der Einwirkung jeweils einer Feder (6) um begrenzte Beträge in jeweils eine Rastmulde (7) der Ausnehmungen (3) bzw. Aufbewahrungskammem (11) drückbaren Kugeln gebildet sind.

## Claims

1. Jaw model for demonstration of dental works and clinical pictures of teeth and partial dentures, with a jaw arch which is arranged on a base (1) and has at least one recess (3) for receiving an exchangeable insert part (4) which forms a presentation piece, **characterized in that** the base (1) is provided on its underside with storage compartments (11) for the captive storage of further insert parts (4).

2. Jaw model according to Claim 1, **characterized in that** the bottom surfaces (12) of the insert parts (4) accommodated in the storage compartments (11) are flush with the bottom surface (13) of the base (1).

3. Jaw model according to Claim 1 or 2, **characterized in that** locking elements (5) or buffers (9, 10) made of rubber or another suitable plastic and forming a frictional closure are used to mount the insert parts (4) in the recess and the storage compartments (11).

4. Jaw model according to one of Claims 1 to 3, **characterized in that** the bottom of the base (1) is provided with grip depressions (14, 15) making it easier to grip the insert parts (4) mounted in the storage compartments (11).

5. Jaw model according to either of Claims 3 and 4, **characterized in that** the insert parts (4) are provided with the locking elements (5) at opposite ends.

6. Jaw model according to one of Claims 1 to 5, **characterized in that** a groove (17) and a guide bead (18) are used for adjusting the insert parts (16) in the recess (3).

7. Jaw model according to one of Claims 3 to 6, **characterized in that** the locking elements (5) are formed by balls which, in each case under the action of a spring (6), can be forced by limited amounts into a locking depression (7) in the recesses (3) or storage compartments (11), respectively.

## Revendications

1. Modèle de mâchoire pour la démonstration de travaux de médecine dentaire pour l'entretien de dents et les prothèses partielles ainsi que d'aspects d'affections dentaires, ayant un élément arqué formant mâchoire agencé sur un socle (1), ledit arc présentant au moins un évidement (3) pour recevoir une pièce rapportée changeable (4), qui forme un modèle éducatif, **caractérisé en ce que** le socle (1) est pourvu, sur sa face inférieure, de chambres de rangement (11) pour la conservation imperdable d'autres pièces rapportées (4).

2. Modèle de mâchoire selon la revendication 1, **caractérisé en ce que** les surfaces de base (12) des pièces rapportées (4) logées dans les chambres de rangement (11) sont de niveau avec la surface de fond (13) du socle (1).

3. Modèle de mâchoire selon la revendication 1 ou 2, **caractérisé en ce que**, pour maintenir les pièces rapportées (4) dans l'évidement et dans les chambres de rangement (11), on se sert d'éléments d'encliquetage (5) ou de tampons (9,10) permettant une fermeture par frottement constitués de caoutchouc ou d'un matériau plastique approprié.

4. Modèle de mâchoire selon l'une quelconque des revendications 1 à 3, **caractérisé en ce que** le fond du socle (1) est pourvu de cavités de préhension (14, 15) facilitant le prélèvement des pièces rapportées (4) logées dans les chambres de rangement (11).

5. Modèle de mâchoire selon l'une quelconque des revendications 3 ou 4, **caractérisé en ce que** les pièces rapportées (4) sont pourvues des éléments d'encliquetage (5) sur des côtés opposés.

6. Modèle de mâchoire selon l'une quelconque des revendications 1 à 5, **caractérisé en ce qu'**une rainure (17) et une baguette de guidage (18) servent à ajuster les pièces rapportées (16) dans l'évidement (3).

7. Modèle de mâchoire selon l'une quelconque des revendications 3 à 6, **caractérisé en ce que** les éléments d'encliquetage (5) sont formés par des billes qui peuvent être pressées en quantités limitées, respectivement, dans une cavité d'encliquetage (7) des évidements (3) ou des chambres de rangement (11) sous l'influence respective d'un ressort (6).
